# EUROPEAN PATENT SPECIFICATION

(11) **EP 0 499 730 B1**
(45) Date of publication and mention of the grant of the patent: **29.11.1995**
(21) Application number: 91301461.9
(22) Date of filing: 22.02.1991
(51) Int. Cl.: H04B 1/16, H04B 1/10

(54) **Radio receiver operational checking method and system**
Funktionsüberwachungssystem und Verfahren eines Funkempfängers
Procédé et système de vérification du fonctionnement d'un radio-récepteur

(43) Date of publication of application: 26.08.1992
(73) Proprietor: Koenig, Robert H., Burdett, New York 14818 (US)
(72) Inventor: Koenig, Robert H., Burdett, New York 14818 (US)
(74) Representative: Jones, Graham H.

(56) References cited:
- EP-A- 0 075 788
- EP-A- 0 213 801
- US-A- 3 832 636

## Description

### BACKGROUND OF THE INVENTION

### Field of the Invention

This invention relates to a radio receiver operational checking system using the radio receiver's active signal squelch circuit to measure the operability of a radio receiver including identifying which receiver is being checked where a plurality of radio receivers are being monitored.

### Description of the Related Art

For years, radio receivers used in aircraft, military, mobile and other, critical radiant-energy communication links have used circuitry known as "squelch" to make the receiver silent until a "threshold" signal strength is reached, at which time full listening power is activated. Receivers with squelch have a knob for the operator to adjust to the critical silencing point, or "threshold." In some receivers, the adjustment is preset and a pull-knob disables squelch entirely, giving full background noise when volume is turned up. Without the squelch circuitry, there is a continual noise in the form of loud hissing or crackling, commonly known as background noise. The noise is distracting and unpleasant; hence, the use of squelch circuitry systems.

For example, in aviation, where almost everything is duplicated, it is common practice to install two receivers, one for standby, even in small aircraft. Although failure is unlikely, the chance exists that any one of the thousands of electronic components in each of the receivers may cause a system failure. If so, there is nothing to indicate when a squelch-silenced receiver becomes a dead receiver. This could be serious if the aircraft is being flown on instruments in the clouds, if the controller must be heard in order to keep the plane, pilot and passengers safe, or in any number of other situations where it is crucial to have an operative radio.

Some pilots and communicators disable squelch and tolerate the noise in order to know that the radio is live. Others leave the squelch control on and trust blindly to fate. Still others bungle and foul up their communication by inadvertently having the radio turned down or off.

U.S. Patent No. 4,718,115 (Inoue), entitled "RADIO RECEIVER FOR CARRYING OUT SELF DIAGNOSIS WITHOUT INTERFERENCE," is of interest as a general reference in this case as it discloses the category of prior art where a separate diagnostic signal is introduced in the path of the incoming signal as it goes through the radio receiver. This category of prior art is distinctively different from the present invention in that the invention, which is to be described herein, periodically deactivates the squelch circuitry as a method of determining the operational status of the radio and does not use a separate diagnostic signal.

### SUMMARY OF THE INVENTION

In the following discussion, subliminal or near-subliminal refers to pulse duration which is long enough to be heard without being intrusive or annoying.

This invention solves the problem of determining the operational status of squelch-silenced radios, and further adds the option of having an effectively silent radio when no voice is present, by providing near-subliminal short bursts of full-sensitivity receiver noise to indicate that the radio is operational and that the volume is adequately adjusted. In addition, if more than one radio is being used, the system indicates which of the radios are properly live.

It is therefore an object of this invention to provide a monitoring means for radio receivers which employ squelch silencing, particularly the type used in aircraft communications, as well as other types of communications.

It is another object of this invention to provide means to indicate which of several radios are active and truly live, even though the receiver is essentially silenced by squelch.

It is still another object of this invention to provide means for giving radio operators assurance that their receiving equipment has not failed and is live, even though the speaker or headphones are essentially silenced by squelch.

It is still another object of this invention to prevent inadvertent mix-ups of adjustment of multiple communication radios or other communication set-up on an aircraft.

It is still another object of this invention to provide means for informing a pilot or radio operator coming new on the watch that there is reception and which particular radios are adjusted live.

The foregoing objectives are achieved by the present invention by means of a clock driven pulse source for each radio receiver to provide repetitive narrow pulses to deactivate momentarily each radio's noise squelch circuit at regular intervals, to give indication that the said radio receiver is operational and awaiting a radio frequency signal.

Further objectives may be found in the following drawings, specification and claims.

### BRIEF DESCRIPTION OF THE DRAWINGS

FIGURE 1 is a block diagram of the circuitry of the invention.

FIGURES 2A-L show the wave-form/pulse timing of the signals generated using the invention.

### DETAILED DESCRIPTION OF THE INVENTION

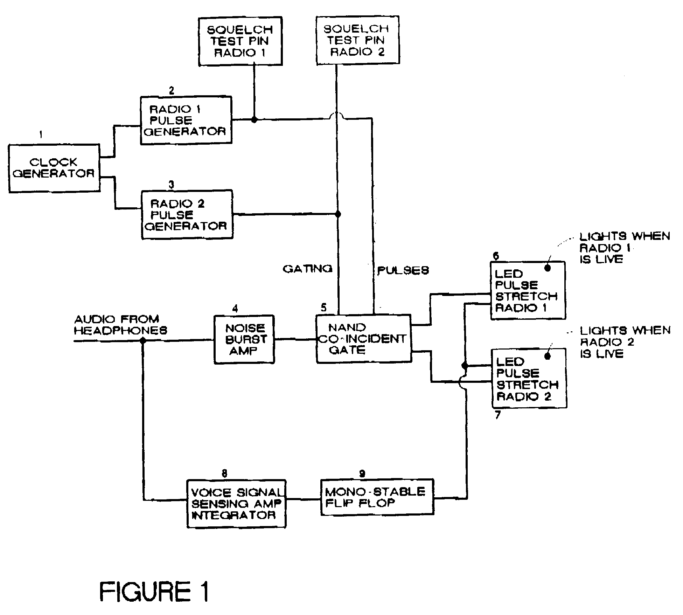

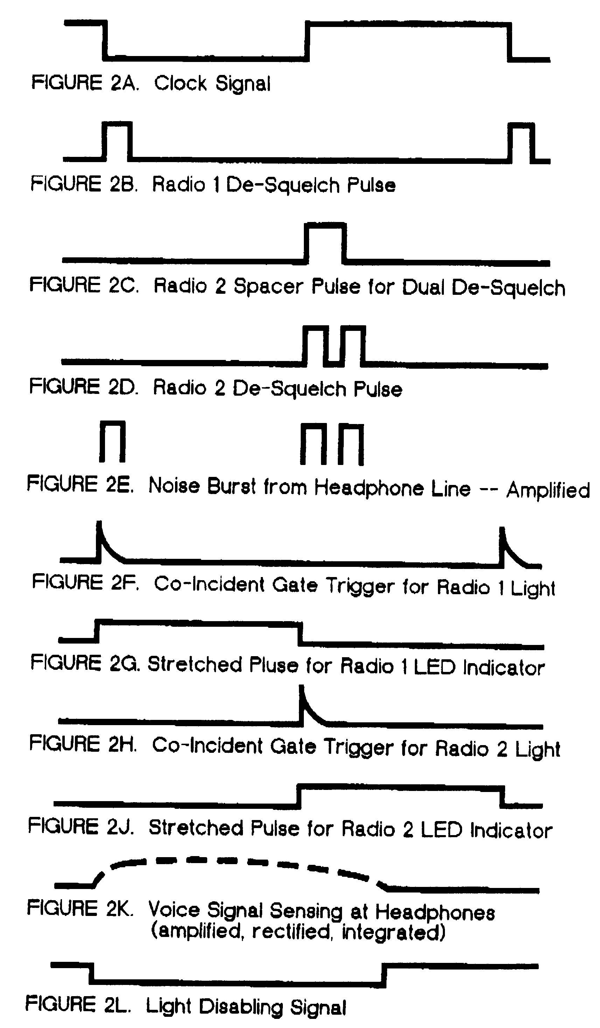

Referring primarily to FIGURE 1, the clock generator (Block 1) creates a rectangular symmetrical wave-form of approximately two seconds between transitions (FIG. 2A). Radio 1 pulse generator (Block 2) is triggered when the transition goes from high to low, and generates a ten millisecond pulse (FIG. 2B) which is sent to deactivate momentarily the Radio 1 squelch circuit. Subsequent clock pulse transition from low to high triggers the radio 2 pulse generator (Block 3). The output pulse pair (FIG. 2D) is likewise wired to the squelch circuit of Radio 2 to deactivate momentarily the squelch and pass the bursts of noise. These pulses are grouped to identify which radio is being checked; thus, double pulse is Radio 2 and single pulse is Radio 1.

The equipment as described above is adequate to perform the audible communication checking claimed in this invention, since the pilot or communicator can hear the periodic noise burst from the "de-squelch" pulses. Note that the squelch system of the radio keeps the radio silent when there is no signal.

This system may be enhanced with the use of indicator lights (shown in FIGURE 1). Blocks 4, 5, 6, 7 provide visual indication to show which radio or radios are live. A Light-Emitting Diode (LED) connected to each radio shows when a particular radio is turned on and adjusted for audible reception.

A noise burst amplifier (Block 4) "listens" on the headphone audio line for any sound. This line would be squelched silent with zero audio signal when no voice transmission was being received -- if it were not for the pulsed noise bursts. Block 4 amplifies these noise bursts when heard at headphone level. The pulse, if present, is amplified and shaped in Block 4 and is passed to a NAND gate (Block 5). This gate passes the pulse on to Block 6 (Radio 1 LED light pulse stretch) if the noise burst pulse occurs co-incident with Radio 1 pulses. Similarly, if headphone noise pulses are co-incident with Radio 2 gating pulses, they are sent to Block 7 (LED pulse stretch for Radio 2).

If Radio 1 and Radio 2 pulses are heard on headphones co-incident with their respective gating pulses, BOTH lights will come on. Blocks 6 and 7 (LED pulse stretchs), when triggered from the gate, turn on the LEDs for most of the four second period between similar pulses. This gives nearly continuous light indication to show which radio is live. The short period during which the indicator blinks dark in each period is a self-checking feature which shows that the light is dependent on the audio noise pulse and is therefore a valid indicator.

Blocks 8 and 9 disable both indicator lights when voice communication is being received. This is shown in FIGS. 2K and 2L. Voice reception would confuse the indication because voice audio signal is present at the sampling instants for the noise pulse checking. This circuit solves the trouble of both lights coming on erratically when voice is present by preventing either light from turning on when voice is present.

A logarithmic response is used to accomodate wide variations in audio level at the headphone line.

In an embodiment of this invention, Blocks 1-3, 5 and 6 in FIGURE 1 are made up of integrated circuit (IC) chips of the "TIMER" classification, which are standard eight (8) pin chips. For compact packaging, dual or multiple units can be used. The economical type 555 or 556 have been used. Block 4 can be a 741 Op Amp IC and Block 5 a 7400 Quadrangle NAND Gate IC. Block 8 is an Op Amp IC such as a type 741; Block 9 is a Timer IC such as a type 555. These parts are illustrative only and are not limiting in any way.

The foregoing description has been directed to particular embodiments of the invention for the purposes of illustration and explanation. It will be apparent, however, to those skilled in this art that many modifications and changes will be possible without departure from the scope of the invention. It is intended that the following claims be interpreted to embrace all such modifications.

## Claims

1. A radio receiver operational checking system comprising in combination:
a) a radio receiver including an active radio noise squelch circuit, set at a level to eliminate ambient noise, that is to say atmospheric and receiver noise, when no radio signal is being received, and including a squelch control connection point where said squelch circuit can be disabled by the application of a voltage of appropriate magnitude,
b) a clock-driven pulse source (2; 3) for said radio receiver providing repetitive short pulses for application to said squelch control connection point to deactivate momentarily said noise squelch circuit at regular intervals to provide repetitive, short noise pulses in the audio output of said radio receiver indicating that said radio receiver is operational and awaiting a radio frequency signal.

2. The radio receiver operational checking system of Claim 1 further comprising light indicating means for said radio receiver to monitor visually said audio short noise pulse outputs of said receiver and to turn on when said short noise pulse output of said receiver coincides with said short pulses from said clock-driven pulse source (2; 3) being applied to said squelch control connection point of said radio receiver as an indication of the operability of said receiver.

3. The radio receiver operational checking system of Claim 1 wherein there are a plurality of radio receivers and a clock-driven differing pulse source (2; 3) for each of said radio receivers.

4. The radio receiver operational checking system of Claim 3 wherein said clock-driven differing pulse sources (2, 3) are spaced in time and waveform such that the audio output of each radio receiver is audibly distinguishable from each other.

5. The radio receiver operational checking system of Claim 4 further comprising light indicating means for each of said radio receivers to monitor visually said audio short noise pulse outputs of said receivers and to turn on when said short noise pulse output of said receivers coincide with said short pulses from said clock-driven pulse sources (2, 3) being applied to said squelch control connection points of said radio receivers as an indication of the operability of said receivers.

6. The radio receiver operational checking system of Claim 5 further comprising audio signal responsive means (8) for switching off said light indicating means (6; 7) for each of said receivers when each of said receivers is receiving a radio signal.

7. Method for checking the operational status of at least one radio receiver having a squelch circuit, comprising the steps of:
a) applying repetitive, short pulses to the squelch control connection point of said radio receiver to deactivate said squelch circuit at regular intervals to provide repetitive, short noise pulses in the audio output of said radio receiver, indicating that said radio receiver is operational and awaiting a radio frequency signal,
b) said repetitive short pulses applied to said squelch control connection point being of sufficiently short duration, so as to have a negligible effect on the pilot or radio operator.

8. The method of Claim 7 wherein said repetitive short pulses are of sufficiently short duration and small amplitude so as to be perceived almost subliminally by the pilot or radio operator.

9. The method of Claim 7 further comprising the additional steps of applying said repetitive, short pulses which are applied to the squelch control connection point of said radio receiver to deactivate said squelch circuit at regular intervals, are also applied to light indicating means (6; 7) to indicate that said radio receiver is operational and awaiting a radio frequency signal.

10. Method of checking the operational status of a plurality of radio receivers, each having a squelch circuit, comprising the steps of:
a) from separate, coordinated pulse sources (2, 3), applying repetitive, short pulses to the squelch control connection point of each of said radio receivers to deactivate said squelch circuits at regular intervals, to provide repetitive, short, identifiable noise pulses in the audio output of said radio receivers, indicating which of said radio receivers are operational and awaiting a radio frequency signal,
b) spacing said repetitive short pulses, from each of said coordinated pulse sources to each of said receivers, in time and waveform such that the audible output of each of said radio receivers is audibly distinguishable from each other,
c) said repetitive short pulses applied to said squelch control connection points being of sufficiently short duration, so as to have a negligible effect on the pilot or radio operator when present.

11. The method of Claim 10 further comprising the additional steps of applying said repetitive, short pulses also to light indicating (6, 7) means to indicate that said radio receivers are operational and awaiting radio frequency signals, wherein said light indicating means (6; 7) is normally switched off, but, in response to said repetitive, short pulses, is switched on.

12. The method of Claim 11 further comprising the additional step of applying an audio signal responsive means to switch off said light indicating means (6; 7) for each of said receivers when either of said receivers is receiving a voice radio signal.

## Patentansprüche

1. Funktionsüberwachungssystem für Funkempfänger mit folgenden Kombinationsmerkmalen:
a) einem Funkempfänger mit einer aktiven Sperrschaltung für Funkrauschen, die auf einen Pegel eingestellt ist, um bei Nichtempfang eines Funksignals Umgebungsrauschen, d.h. atmosphärisches und empfängereigenes Rauschen, auszuschalten, und einen Sperrschaltungs-Steuerverbindungspunkt aufweist, womit die Sperrschaltung durch Anlegen einer Spannung geeigneter Größe außer Funktion gesetzt werden kann,
b) einer taktgesteuerten Impulsquelle (2; 3) für den Funkempfänger, die sich wiederholende kurze Impulse zur Beaufschlagung des Sperrschaltungs-Steuerverbindungspunktes liefert, um die Sperrschaltung in regelmäßigen Zeitabständen augenblicklich zu deaktivieren und so sich wiederholende kurze Störsignalimpulse an dem Audioausgang des Funkempängers auftreten läßt, die anzeigen, daß der Funkempfänger funktionsfähig ist und ein Funkfrequenzsignal erwartet.

2. Funktionsüberwachungssystem für Funkempfänger nach Anspruch 1, des weiteren enthaltend Lichtanzeigemittel für den Funkempfänger zum visuellen Anzeigen der kurzen Audiorausch-Ausgangsimpulse des Empfängers, die sich einschalten, wenn das aus den kurzen Rauschimpulsen bestehende Ausgangssignal des Empfängers mit den dem Sperrschaltungs-Steuerverbindungspunkt des Funkempfängers zugeführten kurzen Impulsen aus der taktgesteuerten Impulsquelle (2; 3) zusammenfallen, als Anzeige für die Funktionsfähigkeit des Empfängers.

3. Funktionsüberwachungssystem für Funkempfänger nach Anspruch 1, worin eine Mehrzahl Funkempfänger und eine taktgesteuerte Impulsquelle (2; 3) für unterschiedliche Impulse für jeden der Funkempfänger auftritt.

4. Funktionsüberwachungssystem für Funkempfänger nach Anspruch 3, worin die verschiedenen taktgesteuerten Impulsquellen (2, 3) sich nach Zeitabstand und Wellenform unterscheiden, so daß die Audio-Ausgangssignale der einzelnen Funkempfänger hörbar voneinander zu unterscheiden sind.

5. Funktionsüberwachungssystem für Funkempfänger nach Anspruch 4, des weiteren enthaltend Lichtanzeigemittel für einen jeden der Funkempfänger zum visuellen Anzeigen der kurzen Audiorausch-Ausgangsimpulse der Empfänger, die sich einschalten, wenn das aus den kurzen Rauschimpulsen bestehende Ausgangssignal der Empfänger mit den auf die Sperrschaltungs-Steuerverbindungspunkte der Funkempfänger gegebenen kurzen Impulsen aus den taktgesteuerten Impulsquellen (2, 3) zusammenfallen, als Anzeige für die Funktionsfähigkeit der Empfänger.

6. Funktionsüberwachungssystem für Funkempfänger nach Anspruch 5, des weiteren enthaltend auf Audiosignale ansprechende Mittel (8) zum Ausschalten der Lichtanzeigemittel (6; 7) für einen jeden der Empfänger, wenn ein jeder der Empfänger ein Funksignal empfängt.

7. Verfahren zum Überwachen der Funktionsfähigkeit zumindest eines eine Rauschsperrschaltung aufweisenden Funkempfängers mit folgenden Verfahrensschritten:
a) Anlegen sich wiederholender kurzer Impulse an den Sperrschaltungs-Steuerverbindungspunkt des Funkempfängers zum Deaktivieren der Sperrschaltung in regelmäßigen Zeitabständen, um am Audioausgang des Funkempfängers sich wiederholende kurze Rauschsignalimpulse auftreten zu lassen, die anzeigen, daß der Funkempfänger funktionsfähig ist und ein Funkfrequenzsignal erwartet,
b) die an den Sperrschaltungs-Steuerverbindungspunkt gelieferten, sich wiederholenden kurzen Impulse sind genügend kurzzeitig, um einen vernachlässigbaren Einfluß auf den Piloten oder Funker zu haben.

8. Verfahren nach Anspruch 7, worin die sich wiederholenden kurzen Impulse hinreichend kurzzeitig und von hinreichend kleiner Amplitude sind, um von dem Piloten oder Funker beinahe unterbewußt wahrgenommen zu werden.

9. Verfahren nach Anspruch 7, des weiteren enthaltend den zusätzlichen Schritt, die an den Sperrschaltungs-Steuerverbindungspunkt des Funkempfängers zur Deaktivierung der Sperrschaltung in regelmäßigen Zeitabständen gelieferten, sich wiederholenden kurzen Impulse auch auf Lichtanzeigemittel (6; 7) zu geben zur Anzeige dessen, daß der Funkempfänger funktionsfähig ist und ein Funkfrequenzsignal erwartet.

10. Verfahren zur Überwachung der Funktionsfähigkeit einer Mehrzahl von Funkempfängern, deren jeder eine Rauschsperrschaltung aufweist, mit folgenden Verfahrensschritten:
a) Anlegen sich wiederholender kurzer Impulse aus separaten, koordinierten Impulsquellen (2, 3) an den Sperrschaltungs-Steuerverbindungspunkt eines jeden der Funkempfänger zum Deaktivieren der Sperrschaltungen in regelmäßigen Zeitabständen, um am Audioausgang der Funkempänger sich wiederholende kurze, identifizierbare Rauschsignalimpulse auftreten zu lassen, die anzeigen, welche der Funkempfänger funktionsfähig sind und ein Funkfrequenzsignal erwarten,
b) Beabstanden der sich wiederholenden kurzen Impulse aus einer jeden der koordinierten Impulsquellen für einen jeden der Empfänger nach Zeit und Wellenform derart, daß die hörbaren Ausgangssignale der einzelnen Funkempfänger hörbar voneinander zu unterscheiden sind,
c) die auf die Sperrschaltungs-Steuerverbindungspunkte gegebenen, sich wiederholenden kurzen Impulse sind von hinreichend kurzer Dauer, um bei ihrem Auftreten einen vernachlässigbaren Einfluß auf den Piloten oder Funker zu haben.

11. Verfahren nach Anspruch 10, des weiteren enthaltend den zusätzlichen Schritt, die sich wiederholenden kurzen Impulse auch auf Lichtanzeigemittel (6, 7) zu geben zur Anzeige dessen, daß die Funkempfänger funktionsfähig sind und Funkfrequenzsignale erwarten, wobei die Lichtanzeigemittel (6; 7) normalerweise ausgeschaltet, jedoch auf die sich wiederholenden kurzen Impulse hin eingeschaltet sind.

12. Verfahren nach Anspruch 11, des weiteren enthaltend den zusätzlichen Schritt, auf Audiosignale ansprechende Mittel zum Abschalten der Lichtanzeigemittel (6; 7) für einen jeden Empfänger vorzusehen, wenn einer der Empfänger ein Sprechfunksignal empfängt.

## Revendications

1. Système de vérification opérationnelle pour récepteur radio, comprenant en combinaison :
a) un récepteur radio comportant un circuit actif d'élimination de bruit radio, réglé à un niveau pour éliminer du bruit ambiant, c'est-à-dire du bruit atmosphérique et du récepteur, lorsqu'aucun signal radio n'est en cours de réception et comportant un point de connexion de commande d'élimination là où le circuit d'élimination peut être mis hors service par l'application d'une tension de grandeur appropriée,
b) pour le récepteur radio, une source d'impulsions (2 ; 3), commandée par une horloge et fournissant de courtes impulsions répétitives à appliquer au point de connexion de commande d'élimination afin de désactiver momentanément, à des intervalles réguliers, le circuit d'élimination de bruit afin de fournir dans la sortie audio du récepteur radio de courtes impulsions répétitives de bruit qui indiquent que le récepteur radio est opérationnel et en attente d'un signal de fréquence radio.

2. Système de vérification opérationnelle pour récepteur radio de la revendication 1, caractérisé en ce qu'il comprend en outre des moyens d'indication lumineux pour le récepteur radio afin de surveiller visuellement les sorties audio des courtes impulsions de bruit du récepteur et de se mettre en service lorsque cette sortie de courtes impulsions de bruit du récepteur coïncide avec lesdites courtes impulsions, en provenance de la source d'impulsions (2 ; 3) commandée par horloge, qui sont appliquées au point de connexion de commande d'élimination du récepteur radio en tant qu'indication de la possibilité de fonctionner du récepteur.

3. Système de vérification opérationnelle pour récepteur radio de la revendication 1, caractérisé en ce qu'il y a une pluralité de récepteurs radio et, pour chacun des récepteurs radio, une source (2 ; 3) d'impulsions différente, commandée par horloge.

4. Système de vérification opérationnelle pour récepteur radio de la revendication 3, caractérisé en ce que les sources (2 ; 3) d'impulsions différentes et commandées par horloge sont espacées dans le temps et dans la forme d'onde de façon que la sortie audio de chaque récepteur radio puisse être distinguée de façon audible de chaque autre.

5. Système de vérification opérationnelle pour récepteur radio de la revendication 4, caractérisé en ce qu'il comprend en outre des moyens d'indication lumineux pour chacun des récepteurs radio afin de surveiller visuellement les sorties audio de courtes impulsions de bruit desdits récepteurs et de se mettre en service lorsque les sorties de courtes impulsions de bruit desdits récepteurs coïncident avec les courtes impulsions, en provenance des sources (2 ; 3) d'impulsions commandées par horloge, qui sont appliquées aux points de connexion de commande d'élimination des récepteurs radio en tant qu'indication de la possibilité de fonctionner des récepteurs précités.

6. Système de vérification opérationnelle pour récepteur radio suivant la revendication 5, caractérisé en ce qu'il comprend en outre des moyens (8), sensibles au signal audio, destinés à mettre hors service les moyens d'indication lumineux (6 ; 7) pour chacun des récepteurs lorsque chacun des récepteurs est en cours de réception d'un signal radio.

7. Procédé pour vérifier l'état opérationnel d'au moins un récepteur radio comportant un circuit d'élimination, comprenant :
a) une application répétitive de courtes impulsions au point de connexion de commande d'élimination du récepteur radio afin de désactiver à des intervalles réguliers le circuit d'élimination pour procurer dans la sortie audio du récepteur radio de courtes impulsions répétitives de bruit qui indiquent que le récepteur radio est opérationnel et en attente d'un signal de fréquence radio,
b) les courtes impulsions répétitives appliquées au point de connexion de commande d'élimination étant d'une durée suffisamment courte de façon à avoir un effet négligeable sur le pilote ou l'opérateur à radio.

8. Procédé de la revendication 7, caractérisé en ce que les courtes impulsions répétitives sont d'une durée suffisamment courte et d'une amplitude suffisamment petite de façon à être perçues pratiquement sublimalement par le pilote ou l'opérateur radio.

9. Procédé de la revendication 7, caractérisé en ce qu'il comprend en outre les étapes supplémentaires d'appliquer également les courtes impulsions répétitives, qui sont appliquées au point de connexion de commande d'élimination du récepteur radio afin de désactiver à des intervalles réguliers le circuit d'élimination, aux moyens d'indication lumineux (6 ; 7) afin d'indiquer que le récepteur radio est opérationnel et en attente d'un signal de fréquence radio.

10. Procédé de vérification de l'état opérationnel d'une pluralité de récepteurs radio qui comportent chacun un circuit d'élimination, comprenant :
a) une application, à partir de sources d'impulsions (2 ; 3) séparées et coordonnées, de courtes impulsions répétitives au point de connexion de commande d'élimination de chacun des récepteurs radio afin de désactiver à des intervalles réguliers les circuits d'élimination pour procurer dans la sortie audio des récepteurs radio de courtes impulsions répétitives et identifiables de bruit qui indiquent lesquels parmi les récepteurs radio sont opérationnels et en attente d'un signal de fréquence radio,
b) un espacement, dans le temps et dans la forme d'onde, des courtes impulsions répétitives en provenance de chacune des sources d'impulsions coordonnées et destinées à chacun des récepteurs, de façon que la sortie audible de chacun des récepteurs radio puisse être distinguée de façon audible de chaque autre,
c) les courtes impulsions répétitives appliquées aux points de connexion de commande d'élimination étant d'une durée suffisamment courte de façon à avoir un effet négligeable sur le pilote ou l'opérateur radio lorsqu'elles sont présentes.

11. Procédé de la revendication 10, caractérisé en ce qu'il comprend en outre les étapes supplémentaires d'appliquer également les courtes impulsions répétitives aux moyens d'indication lumineux (6 ; 7) afin d'indiquer que les récepteurs radio sont opérationnels et en attente de signaux de fréquences radio, les moyens d'indication lumineux (6 ; 7) étant normalement mis hors service mais étant mis en service en réponse aux courtes impulsions répétitives.

12. Procédé de la revendication 11, caractérisé en ce qu'il comprend en outre l'étape supplémentaire d'appliquer des moyens sensibles au signal audio afin de mettre hors service les moyens d'indication lumineux (6 ; 7) pour chacun des récepteurs lorsque l'un ou l'autre des récepteurs est en cours de réception d'un signal radio vocal.
